(19)

Europäisches Patentamt

European Patent Office

Office européen des brevets

(11) **EP 2 062 813 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
*B63H 21/17* (2006.01)   *B63H 21/20* (2006.01)
*B63H 23/24* (2006.01)

(21) Anmeldenummer: **07022773.1**

(22) Anmeldetag: **23.11.2007**

(54) **Verfahren und Vorrichtung zur schnellstmöglichen Stillsetzung der elektrisch angetriebenen Propeller eines Schiffs**

Method and device for the fastest possible shut-down of electrically-driven ship propellers

Procédé et dispositif destinés à l'arrêt aussi rapide que possible des hélices entraînées électriquement d'un bateau

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**27.05.2009 Patentblatt 2009/22**

(73) Patentinhaber: **SIEMENS AKTIENGESELLSCHAFT 80333 München (DE)**

(72) Erfinder:
• **Geil, Günter**
  **28277 Bremen (DE)**
• **Wietoska, Jens**
  **28201 Bremen (DE)**
• **de Ruiter, Robin**
  **20251 Hamburg (DE)**

(56) Entgegenhaltungen:
**EP-A- 1 568 601      EP-A- 1 614 621
DE-A1- 10 011 601      DE-U1- 9 301 877
US-A- 4 316 722**

EP 2 062 813 B1

## Beschreibung

Die Erfindung richtet sich auf ein Verfahren und eine Vorrichtung zur schnellstmöglichen Stillsetzung der elektrisch angetriebenen Propeller eines Schiffs (Schnellhalt).

Eine gattungsgemäße Vorrichtung und entsprechendes Verfahren ist bekannt aus Dokument EP 1 568 601.

Seeschiffe erhalten ihren Vortrieb zumeist von einem oder mehreren Propellern. Während solche Propeller früher direkt an die Abtriebswelle einer Dampfmaschine oder eines Dieselmotors gekoppelt waren, treiben bei modernen Seeschiffen immer häufiger Elektromotoren die Propellerwelle an, welche die dazu benötigte Antriebsleistung von Elektrogeneratoren erhalten, welche ihrerseits mechanisch mit Diesel- oder Dampfmaschinen (Nuklearantrieb) gekoppelt sind. Der Vorteil besteht darin, dass solchenfalls der/die Generatoren stets mit einer optimalen Drehzahl betrieben werden können, während die Leistungserzeugung bspw. bei Synchrongeneratoren leicht durch die Erregung gesteuert werden kann.

Andererseits ist es bei vielen Seeschiffen, u.a. auch bei Passagierschiffen, wichtig, den/die Propeller bspw. in einem Notfall so schnell als möglich stillsetzen zu können. Wenn bspw. eine Person über Bord gegangen ist und im Wasser treibt, soll vermieden werden, dass diese in den Sog der Propeller gerät und dabei verletzt würde.

Für diesen Zweck wurden bisher große mechanische Bremssysteme eingesetzt, die bei Bedarf die Antriebswelle eines Propellers abbremsen und bei Drehzahl null halten.

Bei einem solchen Manöver entstehen jedoch hohe Bremsleistungen und Bremsenergien, weil die rotierenden mechanischen Massenträgheitsmomente vom Rotor des Elektromotors, der Schiffswelle, des Propellers, die am Propeller mitschwingenden Wassermassen und der über den Turbineneffekt angetriebene Propeller auf Grund der sehr kurzen Stoppzeit hohe Gegenmomente erzeugen. Die Antriebs- und Bremsleistung liegt in der Regel im ein- oder zweistelligen Megawattbereich. Die Bremsenergie liegt in der Regel im zwei- oder dreistelligen Megajoulebereich. Die Bremszeit liegt in der Regel zwischen einer halben bis zu einer Minute. Um diese Bremsenergie in diesem kurzen Zeitraum aufnehmen zu können, sind riesige Bremsscheiben erforderlich, mit mehreren Metern Durchmesser und einer erheblichen Dicke, welche sich bei einem Schnellhalt bis zum Glühen aufheizen. Andererseits speichern derart große Massen zusätzliche Rotationsenergie, welche beim Schnellhalt ebenfalls vernichtet, d.h. in Wärme umgewandelt werden muß. Die zusätzliche Trägheit reduziert die Reaktionsfähigkeit des Antriebs bei Drehzahländerungen. Ferner muß diese zusätzliche Masse auch bei jedem Fahrmanöver mit beschleunigt werden und erhöht daher den Energiebedarf des Schiffes. Durch das hohe Gewicht reduziert sich nicht zuletzt auch die Ladekapazität eines Schiffes.

Aus diesen Nachteilen des beschriebenen Standes der Technik resultiert das die Erfindung initiierende Problem, eine Möglichkeit zu finden, wie bei einem Schiff mit elektrisch angetriebener Propellerwelle ein Schnellhalt realisiert werden kann, ohne dass dazu die oben beschriebenen, mechanischen Bremssysteme erforderlich sind.

Die Lösung dieses Problems gelingt dadurch, dass während des Schnellhaltes die Bremsenergie von wenigstens einem Elektromotor des Schiffsantriebs zurückgespeist wird.

Elektromotoren können bei schiebender bzw. durchziehender Last als Generatoren arbeiten und wandeln die dabei aufgenommene Energie zu einem Großteil in Wärme um. Diese elektrische Energie kann mit geringen Verlusten von der Propellerwelle weg geleitet werden. Man könnte daher daran denken, mit dieser Energie bspw. ein Schwungrad anzutreiben, um die Energie zwischenzuspeichern. Allerdings ist eine derartige Anordnung sehr aufwendig und benötigt außerdem einen nicht unerheblichen Raum.

Deshalb hat es sich als günstiger erwiesen, dass bei Schnellhalt die Bremsenergie von einem den Elektromotor im Fahrbetrieb speisenden Um- und/oder Stromrichter in das Bordnetz zurückgespeist wird. Bei vielen Schiffen, gerade auch bei großen Passagierdampfern, hat der Hotelbetrieb an Bord eine durchaus mit der Antriebsleistung vergleichbare Leistungsaufnahme. Daher könnte zumindest bei einem langsamen Bremsvorgang die Bremsenergie vollständig in das Bordnetz eingespeist und bei gleichzeitiger Drosselung der Generatoren von diesem allmählich aufgebraucht werden. Bei einem Schnellhalt fällt jedoch in einem sehr kurzen Zeitraum eine sehr große Bremsenergie an, welche die normalen Verbraucher des Bordnetzes nicht aufnehmen können. Deshalb könnte das Bordnetz allein ein Schwungrad nicht ersetzen.

Aus diesem Grund sieht die Erfindung wie beansprucht in unabhängigen Ansprüchen 1 und 14, weiterhin vor, dass bei Schnellhalt die zurückgespeiste Bremsenergie zumindest teilweise in wenigstens einem, vorübergehend an das Bordnetz angeschalteten Bremswiderstand in Wärme umgewandelt wird. Solche Bremswiderstände können für jeden Energiebedarf gebaut werden. In dem hier interessierenden Leistungsbereich füllt ein Bremswiderstand durchaus einen oder mehrere Schaltschränke. Da diese Widerstände bei Bedarf an das Bordnetz gehängt werden, bei welchem die Spannung $U_N$ näherungsweise als etwa konstant angenommen werden kann, läßt sich einem Widerstandswert R eines Bremswiderstands eine Nenn-Aufnahmeleistung $P_N = U_N * I = U_N^2 / R$ zuordnen, die während des Betriebs am Bordnetz aus diesem aufgenommen wird. Durch die dabei anfallende Verlustleistung heizt sich der Bremswiderstand auf. Seine Temperatur erreicht nach einem vorausberechenbaren Wert eine kritische Grenze, zumeist nach etwa 30 bis 40 Sekunden, so dass der Widerstand anschließend sofort abgeschaltet werden muß, um wieder abkühlen zu können. Für einen Schnellhalt, bei dem der Propeller nach etwa 30 bis 60 Sekunden zum Stehen gebracht wird, genügt dieser Zeitraum jedoch; falls gewünscht, können auch zwei oder mehr Bremswiderstände vorgesehen und ggf. zeitlich gestaffelt eingeschaltet werden.

Um zu erkennen, wann ein Bremswiderstand erforderlich ist, sollte bei Schnellhalt die zurückgespeiste Bremsleistung berechnet oder ermittelt werden, insbesondere durch Multiplikation des Drehzahlistwertes n mit dem von einem Drehzahlregler erzeugten Drehmomentsollwert D*. Der Drehmomentsollwert D* ist zu diesem Zweck besser geeignet als der Drehmomentistwert D, da letzterer starken Schwankungen unterliegt. In Kenntnis der vor Einleiten des Schnellhalts von den Generatoren erzeugten Wirkleistung kann der momentane Leistungsbedarf des Bordnetzes leicht ermittelt und mit der zur Verfügung stehenden Bremsleistung verglichen werden, um zu erkennen, bis zu welchem Umfang das Bordnetz die Bremsleistung aufnehmen kann.

Bei einem Schnellhalt sollte wenigstens ein Bremswiderstand dann an das Bordnetz geschaltet wird, wenn der berechnete oder ermittelte Wert der zurückgespeisten Bremsleistung betragsmäßig größer wird als ein vorgegebener Schwellwert. Dieser Schwellwert berücksichtigt, dass die Generatoren nicht augenblicklich zurückgefahren werden können, ohne die Gefahr, dass die Dieselaggregate außer Kontrolle geraten. Außerdem sollten die Generatoren, solange sie am Bordnetz hängen, nicht völlig entlastet werden, weil auch dann undefinierte Betriebszustände eintreten, bspw. ein Außertrittfallen aus dem synchronisierten Betrieb.

Die Erfindung sieht weiterhin vor, dass bei Schnellhalt wenigstens ein an das Bordnetz geschalteter Bremswiderstand erst dann wieder vom Bordnetz abgetrennt wird, wenn eine der folgenden Bedingungen erfüllt ist:

    a) der Betrag der zurückgespeisten Bremsleistung sinkt unter einen zweiten, kleineren Schwellwert (Hysterese), oder
    b) seit Einschalten des Bremswiderstands ist ein vorgegebenes Zeitintervall verstrichen (maximale Einschaltzeit).

Mit der ersten Ausschaltbedingung wird ein undefiniertes Schwingen der Schalter zwischen dem Bordnetz und den Bremswiderständen vermieden; die zweite Bedingung dient eben der oben beschriebenen Vermeidung einer Überhitzung eingeschalteter Bremswiderstände.

Die Erfindung verändert bei einem Schnellhalt die Struktur der Drehzahlregelung des elektrischen Propellerantriebssystems gegenüber der Struktur bei Normalbetrieb nicht, sondern verändert nur einen oder mehrere Parameter der Drehzahlregelung des elektrischen Propellerantriebssystems gegenüber den entsprechenden Parametern bei Normalbetrieb. Damit wird auch bei einem Schnellhalt, der doch eine erhebliche Ausnahmesituation für einen Propellerantrieb darstellt, auf das im Normalbetrieb bewährte Regelungskonzept zurückgegriffen. Dieses wird lediglich an die besondere Situation während eines Schnellhaltes angepasst.

Einerseits wird bei einem Schnellhalt der Drehzahlsollwert von dem Maschinentelegraphen umgeschaltet auf den fest eingestellten Sollwert "0". Daher ist die Stellung des Maschinentelegraphen bei einem Schnellhalt nicht mehr relevant - der Wahlhebel muss nicht zurückgestellt werden. Dies hat den Vorteil, dass ein solcher Schnellhalt auch von einem anderen Ort ausgelöst werden kann als von der Brücke eines Schiffes, bspw. über einen Schalter am Achterdeck des Schiffs oder sogar vom Maschinenraum aus, wenn bspw. dort ein Defekt an dem betreffenden Antriebssystem oder auch an einem Antriebssystem für einen anderen Propeller entdeckt wird, etc. Mehrere solche "Schnellhalt"-Schalter oder -Taster können über das ganze Schiff verteilt sein ähnlich wie Notbremsen in einem Zug. Alle Signale dieser Schalter oder Taster werden zusammengefasst, bspw. parallelgeschalten, und steuern bspw. ein gemeinsames Relais an, welches sodann die erforderlichen Umschaltungen vornimmt und bei Auslösung eines Schnellhalts völlig selbsttätig alle Schiffsschrauben schnellstmöglich zum Stillstand bringt.

Als weitere Maßnahme wird bei einem Schnellhalt die Rücklaufzeit für einen Drehzahlsollwert-Hochlaufgeber reduziert, insbesondere durch Umschalten des Eingangs für die Rücklaufzeit auf einen anderen Funktionsgeber. Dieser Drehzahlsollwert-Hochlaufgeber bestimmt allerdings nur während der ersten Sekunden, bspw. innerhalb der ersten drei Sekunden, den Rückgang der Drehzahl, weil in diesem Bereich nur der von dem Propeller erzeugte Schub abgebaut wird. Sobald die Drehzahl auf etwa 70% des Ausgangswertes abgefallen ist, läuft der Propeller etwa synchron mit der Vorwärtsbewegung des Schiffes durch das Wasser, erfährt also keine zusätzliche Abbremsung mehr. Ab diesem Zustand kann der Antrieb dem Drehzahlsollwert nicht mehr folgen, weil er nicht die Kraft bzw. Bremskapazität hat, um den Propeller innerhalb von etwa 10 Sekunden auf null abzubremsen. Diese Rücklaufzeit von etwa 10 Sekunden hat sich andererseits als optimal erwiesen, weil dadurch in der Anfangsphase der Schnellhaltsequenz die Abbremsung den mit den Propellern gekoppelten Wassermassen überlassen werden kann. Außerdem brauchen die Generatoren diesen Zeitraum von etwa 3 Sekunden, um aus dem Zustand hoher Leistungsabgabe kontrolliert nahe bis an den Leerlauf herangefahren werden können.

Ferner wird bei einem Schnellhalt die Rücklaufzeit für einen Drehmomentsollwert-Hochlaufgeber reduziert, insbesondere durch Umschalten des Eingangs für die Rücklaufzeit auf einen anderen Funktionsgeber. Damit wird eine schnellere Änderung des Drehmoments als im Normalbetrieb ermöglicht und damit auch der schnellere Übergang in den aktiven Bremsbetrieb, wobei sich die Richtung des Drehmomentes umkehrt. Obzwar dies für den Antriebsmotor und auch für dessen Stromrichter schneller möglich wäre, darf die das Bordnetz zunächst speisende Generatoranlage nur mit einer begrenzten Geschwindigkeit entlastet werden.

Schließlich wird bei einem Schnellhalt eine das Bremsmoment begrenzende Kennlinie zu größeren, zulässigen Betragswerten des Bremsmomentes hin verschoben, um dem Schnellhalt Priorität gegenüber einem Verschleiß in den Wellenlagerungen einzuräumen. Mit diesem maximalen Bremsmoment fährt der Propellerantrieb schließlich bis zum Stillstand des Propellers herunter.

Bevor dieses maximale Bremsmoment erreicht wird, greift ein anderer Mechanismus begrenzend auf den Ablauf bei Schnellhalt ein. Zu diesem Zweck wird die in das Bordnetz eingespeiste Leistung jedes aktiven Generators gemessen und insbesondere bei einem Schnellhalt die minimale, von einem Generator in das Bordnetz eingespeiste Leistung mit einem Schwellwert verglichen. Bei Unterschreitung desselben wird die Bremsleistung reduziert, um eine völlige Entlastung der aktiven Generatoren zu vermeiden, was für deren Betrieb schädlich wäre.

Eine erfindungsgemäße Vorrichtung zur schnellstmöglichen Stillsetzung wenigstens eines elektrisch angetriebenen Propellers eines Schiffs (Schnellhalt) zeichnet sich aus durch eine Einrichtung, die in der Lage ist, von wenigstens einem Elektromotor des Schiffsantriebs zurückgespeiste Bremsenergie aufzunehmen.

Hierfür kämen zwar bspw. auch eine Schwungscheibe oder gar Akkumulatoren in Betracht, was jedoch mit einem erheblichen Aufwand verbunden wäre. Die Erfindung sieht stattdessen einen den Elektromotor im Fahrbetrieb speisenden Um- und/oder Stromrichter vor, der in der Lage ist, bei Schnellhalt die von wenigstens einem Elektromotor des Schiffsantriebs zurückgespeiste Bremsenergie in das Bordnetz einzuspeisen. Dieses kann die plötzlich zur Verfügung stehende Energie bei gleichzeitiger Entlastung der Generatoren zumindest teilweise aufnehmen.

Bei einem Schnellhalt übersteigt jedoch die eingespeiste Bremsenergie die Aufnahmekapazität des Bordnetzes. Aus diesem Grund ist wenigstens ein Bremswiderstand vorgesehen, der zur teilweisen Umwandlung der bei einem Schnellhalt in das Bordnetz eingespeisten Bremsenergie über einen Schalter, Relais od. dgl. an das Bordnetz anschließbar ist.

Der rechtzeitigen Aktivierung eines solchen Bremswiderstandes dient wenigstens ein Baustein zur Berechnung oder Ermittlung der bei Schnellhalt zurückgespeisten Bremsleistung, insbesondere in Form eines Multiplikators für den Drehzahlistwert n einerseits und den von einem Drehzahlregler erzeugten Drehmomentsollwert D* andererseits. Diesem nachgeschalten ist ein Komparator od. dgl. zum Vergleich des berechneten oder ermittelten Wertes der zurückgespeisten Bremsleistung mit einem vorgegebenen Schwellwert. Bei Überschreiten desselben erkennt das System einen Schnellhalt und aktiviert wenigstens einen Bremswiderstand, um das Bordnetz und insbesondere die dieses speisenden Generatoren zu entlasten.

Wenigstens ein Baustein mit einer Hysteresefunktion wird verwendet, um den einen Bremswiderstand mit dem Bordnetz verbindenden Schalter wieder zu öffnen, sofern ein zweiter, betragsmäßig geringerer Schwellwert über- bzw. betragsmäßig unterschritten wird. Durch diese Hysterese wird ein Schwingen der Schaltorgane (Schütze od. dgl.) vermieden, was bei den hohen, zu schaltenden Lasten innerhalb eines extrem kurzen Zeitraums zu einer Zerstörung der betreffenden Schaltorgane führen würde.

Wenigstens einem Zeitgeberbaustein obliegt es, den einen Bremswiderstand mit dem Bordnetz verbindenden Schalter wieder zu öffnen, wenn seit dem Einschalten des Bremswiderstands ein vorgegebenes Zeitintervall verstrichen ist. Damit wird eine Überhitzung des betreffenden Bremswiderstandes vermieden.

Die Erfindung verwendet einen oder mehrere Umschalter, Umschaltrelais od. dgl., um bei Schnellhalt ein oder mehrere Parameter der Drehzahlregelung des elektrischen Propellerantriebssystems gegenüber den entsprechenden Parametern bei Normalbetrieb zu verändern. Bei diesen Schaltorganen kann es sich letztlich natürlich auch um einen Softwareschalter, bspw. in Form von Parameterzuweisungen oder Sprungbefehlen eines Programms handeln, falls die umzuschaltenden Parameter Bestandteil einer programmtechnisch Realisierten Regelung sind.

Ein erster Umschalter, Umschaltrelaiskontakt od. dgl. schaltet bei Schnellhalt den Drehzahlsollwert von dem Maschinentelegraphen auf den fest eingestellten Sollwert "0" um. Damit ist der weitere Ablauf des Schnellhalts von dem Maschinentelegraphen völlig entkoppelt und läuft sozusagen autark ab.

Ein weiterer Umschalter, Umschaltrelaiskontakt od. dgl. sorgt dafür, dass bei Schnellhalt die Rücklaufzeit für einen Drehzahlsollwert-Hochlaufgeber auf einen reduzierten Wert umgeschaltet wird, der vorzugsweise von einem gesonderten Funktionsgeber generiert ist. Dieser beschleunigte Rücklauf bildet eine Rampe, entlang welcher die vom Antrieb aufgenommene Fahrleistung rapide, aber dennoch nicht abrupt absinkt, so dass den Generatoren Zeit gegeben wird, um kontrolliert von Vollast bis nahezu Leerlauf herabzusteuern.

Ein weiterer Umschalter, Umschaltrelaiskontakt od. dgl. trägt dazu bei, im Fall eines Schnellhalts die Rücklaufzeit für einen Drehmomentsollwert-Hochlaufgeber auf einen reduzierten Wert umzuschalten, der vorzugsweise von einem gesonderten Funktionsgeber generiert ist. Dies ist eine zusätzliche Sicherheit, um in dem Fall, wenn der Antrieb mangels Unterstützung durch den Bremseffekt der mit dem Propeller gekoppelten Wassermassen der Rücklauframpe des Drehzahlsollwertes n* nicht mehr folgen kann, eine zu starke Aussteuerung des Drehzahlreglers zu vermeiden. Auch in diesem unteren Bereich nahe dem synchronen Betrieb bei etwa 70 % der Nenn- bzw. Anfangsdrehzahl wird daher die Änderung der Bremsleistung begrenzt, vorzugsweise über eine Begrenzung der Änderung des Bremsmomentes entsprechend der Formel ?P = n * ?D.

Ferner gibt es einen Umschalter, Umschaltrelaiskontakt od. dgl., der/das bei Schnellhalt von einem das Bremsmoment bei Normalbetrieb begrenzenden Kennliniengeber auf einen das Bremsmoment bei Schnellhalt begrenzenden Kennliniengeber mit größeren, zulässigen Betragswerten des Bremsmomentes umschaltet. Bei deren Bemessung ist nicht mehr der Verschleiß der Lagerungen für die Antriebswelle maßgebend, sondern nur noch die Verwindungsfestigkeit des hinteren Schiffsrumpfes.

Zur Messung der in das Bordnetz eingespeiste Leistung jedes aktiven Generators sind an deren Leistungsausgängen Sensoren, Wandler od. dgl. angeschlossen. Aus deren einzelnen Ausgangssignalen wird bei Schnellhalt von einem Baustein die minimale, von einem Generator in das Bordnetz eingespeiste Leistung ausgewählt und diese sodann von einem Komparator, Integrator od. dgl. mit einem vorgegebenen Schwellwert verglichen, um zu erkennen, ob sich ein Generator dem völligen Leerlauf nähert, was aus regelungstechnischen Gründen unter allen Umständen vermieden werden sollte.

Schließlich entspricht es der Lehre der Erfindung, dass das Ausgangssignal des Komparators, Integrators od. dgl. zu einer den Sollwert für das Bremsmoment begrenzenden Baugruppe geführt ist, um das Bremsmoment zu reduzieren, wenn die minimale, von einem Generator in das Bordnetz eingespeiste Leistung geringer wird als ein vorgegebener Schwellwert. Damit wird die Bremsleistung derart begrenzt, dass kein aktiver Generator seinen völligen Leerlauf am Ausgang erreicht.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

FIG 1    ein Blockschaltbild der wesentlichen Komponenten eines elektrischen Schiffsantriebs einschließlich Generatoren und Bremswiderständen;

FIG 2    den Regelungs- und Leistungsteil für einen Antriebs- strang aus FIG 1 im Detail;

FIG 3    den Steuerungsteil zur Aktivierung eines Satzes von Bremswiderständen aus FIG 1; sowie

FIG 4    ein Diagramm mit dem Drehmoment- und Leistungsverlauf während eines erfindungsgemäßen Schnellhalts, aufgetra- gen über der Drehzahl und jeweils auf Nennwerte ge- normt.

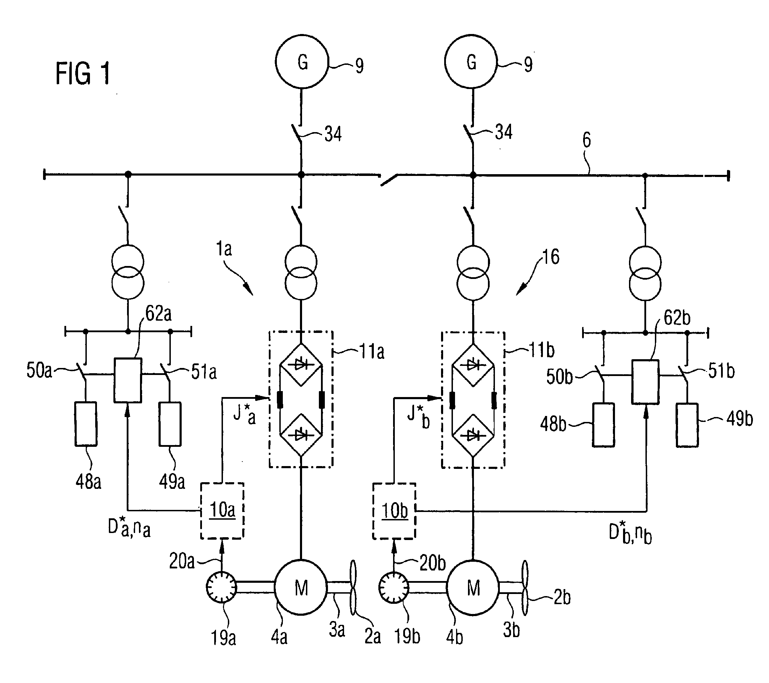

Eine in FIG 1 im Prinzip dargestellte Antriebseinrichtung 1 für ein Motorschiff umfasst im vorliegenden Beispiel zwei Schiffspropeller 2, der über je eine Antriebswelle 3 mit je einem elektrischen Propellermotor 4 gekoppelt ist. Dieser wird von einer Dieselgeneratoranlage 5 über ein Bordnetz 6 und einen Um- bzw. Stromrichter 7 mit elektrischer Energie versorgt.

Die Dieselgeneratoranlage 5 kann eine unterschiedliche Anzahl von Dieselgeneratoren aufweisen. Im vorliegenden Beispiel umfasst sie vier Dieselmotoren 8 mit je einem angekoppelten Synchrongenerator 9.

Jedem elektrischen Propellermotor 4 ist eine Drehzahlregelung 10 und ein Leistungssteuerungsblock 11 zugeordnet. Als Stellglied dient dem letzteren der besagte Um- bzw. Stromrichter 7; dieser ist Bestandteil einer Stromregelschleife mit Stromistwerterfassung 12, Wandler 13 zur Erzeugung eines normierten Stromistwertsignals J, Summationspunkt 14 zur Bildung der Regelabweichung zwischen Stromsollwertsignal J* und Stromistwertsignal J, dem eigentlichen Stromregler 15 sowie einem Ansteuerbaustein 16, der das Ausgangssignal des Stromreglers 15 in Ansteuersignale für den Um- bzw. Stromrichter 7 umsetzt.

Eingangsseitig erhält der Stromregler 15 des Um- bzw. Stromrichters 7 einen Stromsollwert J* von einem Drehzahlregler 17. Mit dem vom Drehzahlregler 17 erzeugten Stromsollwert J* wird im Normalfall eine am Maschinentelegraphen 18 vorgegebene Drehzahl n* ausgeregelt. Hierzu wird die Drehzahl des Propellermotors 4 von einem Sensor erfasst, insbesondere von einem Inkrementalgeber 19. Dessen Ausgangsimpulse 20 werden in einem Wandler 21 in ein normiertes Drehzahlistwertsignal n gewandelt. Zur Ermittlung der auszuregelnden Regelabweichung im Drehzahlregelkreis wird der Drehzahlistwert n in einem Summationspunkt 22 von dem Drehzahlsollwert n* subtrahiert; das Differenzsignal als Maß für die Regelabweichung gelangt zum Eingang des Drehzahlreglers 17.

Da aufgrund der großen, rotierenden Massen im mechanischen Antriebsstrang 2-4 der Drehzahlistwert einer sprunghaften Änderung des Drehzahlsollwertes n* nicht folgen kann und stattdessen vielmehr zum Schwingen angeregt werden könnte, ist zwischen dem Maschinentelegraphen 18 und dem Summationspunkt 22 für die Bildung der Drehzahlregelabweichung ein Hochlaufgeber 23 für den Drehzahlsollwert n* eingefügt, welcher mit einer Rücklaufzeit $T_D$ arbeitet, die im Normalbetrieb von einem Funktionsgeber 24 als leicht ansteigende Funktion des Absolutbetrags |n| des Drehzahlistwerts n vorgegeben wird; der Absolutbetrag |n| wird in einem Baustein 25 gebildet, der an seinem Eingang das Drehzahlistwertsignal n empfängt.

Der Stromsollwert J* wird außer an den Stromregler 15 vom Drehzahlregler 17 noch als Drehmomentsollwert D* zur Eingangsseite eines adaptiven Hochlaufgebers 26 für den Drehmomentsollwert D* geführt. Diesem obliegt es, starke Sprünge des Stromsollwertes J* für den Propellermotor 4 zu vermeiden, weil die damit verbundenen Leistungssprünge von den Dieselgeneratoren 8,9 sonst nicht nachvollzogen werden können. Die von dem Drehmoment-Hochlaufgeber 26 verwendete Hoch- und Rücklaufzeit T wird dabei in einem Funktionsgeber 27 in Abhängigkeit vom Betrag des Drehzahlistwertes |n| vorgegeben. Diese Rücklaufzeit steigt bei mittleren Drehzahlen |n| etwa proportional an und hat bei hohen und niedrigen Drehzahlen |n| jeweils ein Plateau.

Ausgangsseitig weist der adaptive Hochlaufgeber 26 eine positive Offsetstufe 28 und eine negative Offsetstufe 29 auf. Mittels der beiden Offsetstufen 28, 29 wird der Stromsollwert J* mit einem Variationsbereich versehen, wobei eine obere Grenze 30 und eine untere Grenze 31 dieses Variationsbereichs von der Ausgangsseite des adaptiven Hochlaufgebers 26 an die Ausgangsseite des Drehzahlreglers 17 weitergegeben werden, an der eine obere Stromwertbegrenzungseinheit 32 und eine untere Stromwertbegrenzungseinheit 33 vorgesehen sind.

Aus der oberen Strombegrenzungseinheit 32 und der unteren Strombegrenzungseinheit 33 resultiert für den Drehzahlregler 17 ein variabler Stellbereich, innerhalb dessen der ausgangsseitige Stromsollwert J*, der an den Stromregler 15 weitergegeben wird, zu verbleiben hat.

Bei der Ermittlung des Variationsbereichs für den Stromsollwert J* im adaptiven Drehmoment-Hochlaufgeber 26 werden durch die Dieselgeneratoranlage 5 sowie das Bordnetz 6 vorgegebene Grenzwerte berücksichtigt. Durch diese Grenzwerte wird derjenige Variationsbereich begrenzt, innerhalb dessen der ausgangsseitig des Drehzahlreglers 17 diesen verlassende Stromsollwert J* sich verändern kann. Hierbei muss berücksichtigt werden, dass gewährleistet sein muss, dass das Bordnetz 6 dem elektrischen Propellermotor 4 dynamisch folgen kann. Die dynamischen Grenzen bei Laständerungen im Bordnetz 6 bzw. des elektrischen Propellermotors 4 sind hochgradig von den Eigenschaften der Dieselgeneratoranlage 5 abhängig, wobei prinzipiell die Dieselmotoren 8 und die üblicherweise als Synchrongeneratoren ausgebildeten Generatoren 9 der Dieselgeneratoranlage 5 getrennt voneinander zu betrachten sind.

Im adaptiven Drehmoment-Hochlaufgeber 26 werden eine Hoch- und eine Rücklaufzeit T für den Stromsollwert J*, der vom Drehzahlregler 17 an den Stromregler 15 weitergeleitet wird, vorgegeben, wobei bei der Bemessung dieser Hoch- und Rücklaufzeit T die zulässige Be- und Entlastung der Dieselmotoren 8 der Dieselgeneratoranlage 5 berücksichtigt wird. Um dem Rechnung zu tragen, ändert sich die vom adaptiven Drehmoment-Hochlaufgeber 26 verwendete Hoch- und Rücklaufzeit T etwa proportional mit dem Betrag der Drehzahl |n| des elektrischen Propellermotors 4. Hierdurch wird erreicht, dass die von einem Um- bzw. Stromrichter 7 der Antriebseinrichtung 1 aufgenommene Wirkleistung eine von der Drehzahl n des elektrischen Propellermotors 4 unabhängige Hoch- und Rücklaufzeit hat.

In einem unteren Drehzahlbereich des elektrischen Propellermotors 4, der etwa dem Manöverbereich entspricht, werden für vom adaptiven Drehmoment-Hochlaufgeber 26 verwendete Hoch- und Rücklaufzeit T für den Stromsollwert J* eine minimale Hoch- und Rücklaufzeit berücksichtigt, die sich nach der zulässigen Änderung der Blindleistungsabgabe von den Synchrongeneratoren 9 der Dieselgeneratoranlage 5 richtet.

Des weiteren werden die im adaptiven Hochlaufgeber 26 registrierte Hoch- und Rücklaufzeit T des für den Stromsollwert J* umgekehrt proportional zur Anzahl k der aktiven Dieselgeneratoren 8,9 der Dieselgeneratoranlage 5 verändert. Hierdurch wird erreicht, dass die von einem Dieselgenerator 8,9 der Dieselgeneratoranlage 5 aufgenommene Wirkleistung eine vom Betrieb des Um- bzw. Stromrichters 7 unabhängige Hoch- und Rücklaufzeit hat. Je nach der Anzahl k der aktiven Generatoren 9 ergeben sich im Normalbetrieb unterschiedliche Verläufe des Stromsollwertes J*. Zu diesem Zweck sind die Leistungsschalter 34 zum Anschalten eines Generators 9 an eine Sammelschiene des Bordnetzes 6 mit Sensoren versehen, deren Ausgangssignale 35 in einem Funktionsblock 36 in die Funktion $k_{max}/k$ umgesetzt werden, d.h., wenn alle Generatoren 9 in Betrieb sind, liefert dieser Funktionsblock 36 an seinem Ausgang 37 den Wert 1; ist nur die halbe Anzahl der Generatoren 9 aktiv, so liefert der Funktionsblock 36 den Wert 2, usw.

Im ausgeregelten Zustand muss der Drehzahlregler 17 in die Lage versetzt sein, den an den Stromregler 15 weiterzugebenden Stromsollwert J* frei von Begrenzungen führen zu können. Ansonsten entstehen im elektrischen Propellermotor 4 erhebliche Schwebungen, die sich im Schiff als mechanische Schwingungen bzw. Körperschallquellen auswirken und ein Kavitieren des Schiffspropellers 2 fördern oder auch auslösen können. Aus diesem Grunde ist der Stromsollwert J* von der Ausgangsseite des Drehzahlreglers 17, wie auch sonst üblich, weiterhin direkt in den Stromregler 15 des Um- bzw. Stromrichters 7 des elektrischen Propellermotors 4 geführt. Derselbe Stromsollwert J* liegt aber auch parallel an dem adaptiven Hochlaufgeber 26 an. Die Ausgangsseite dieses adaptiven Hochlaufgebers 26 bildet damit die vorstehend erläuterte zulässige Dynamik der Dieselgeneratoren 8,9 der Dieselgeneratoranlage 5 ab. Um der Drehzahlregelung 17 dennoch die erforderliche Variationsbreite bzw. Freiheit zu geben, geht der Ausgangswert des adaptiven Hochlaufgebers 26 über die positive Offsetstufe 28 bzw. die negative Offsetstufe 29 auf die obere Stromwertbegrenzungseinheit 32 bzw. die untere Strombegrenzungseinheit 33 des Drehzahlreglers 17. Hierdurch wird es für den Drehzahlregler 17 möglich, den an den Stromregler 15 des Um- bzw. Stromrichters 7 des elektrischen Propellermotors 4 weiterzuleitenden Stromsollwert J* innerhalb eines sich hinsichtlich seiner Lage und seiner Breite ändernden Variationsbereichs zu führen, wobei sich durch diesen Variationsbereich quasi ein bewegliches Fenster für den vom Drehzahlregler 17 an den Stromregler 15 weitergegebenen Stromsollwert J* ergibt. Innerhalb dieses beweglichen Fensters ist der Drehzahlregler 17 bei der Führung des Stromsollwerts J* frei.

Innerhalb dieses quantitativ und hinsichtlich seiner Positionierung veränderbaren Variationsbereichs bzw. innerhalb des vorstehend geschilderten beweglichen Fensters arbeitet der Drehzahlregler 17 mit seiner vollen Dynamik. Hierdurch kommt es im Bordnetz 6 zu Spannungsschwankungen, da die Erregung der Synchrongeneratoren 9 der Dieselgeneratoranlage 5 dort dem Stromsollwert J*, wie er an den Um- bzw. Stromrichter 7 des elektrischen Propellermotors 4 weitergeleitet wird, zeitlich nicht mehr folgen kann. Der bordnetzseitige Blindstrom vom dem elektrischen Propellermotor 4 zugeordneten Um- bzw. Stromrichter 7 erzeugt diese Spannungsschwankungen über die Reaktanz des Synchrongenerators 9, die sich in der Regel auf Schiffen zu xd" = 14% bis 18% ergibt. Die Größe des positiven Offsets 38 und des negativen Offsets 38, wie sie vom adaptiven Hochlaufgeber 26 für die Breite des Variationsbereichs bzw. des beweglichen Fensters vorgegeben werden, wird so eingestellt, dass der daraus resultierende bzw. deswegen erzeugte bordnetzseitige Blindstrom auf der Reaktanz eines Generators 9 einen Spannungsabfall erzeugt, der in jedem Fall innerhalb der zulässigen Spannungstoleranz im Bordnetz 6 liegt. Schnelle Spannungsschwankungen innerhalb der zulässigen Spannungstoleranz im Bordnetz 6 sind für dessen Betrieb unkritisch. Der positive und der negative Offset 38 ist eine Funktion des Betrages der Drehzahl |n| des elektrischen Propellermotors 4, da der bordnetzseitige Leistungsfaktor von der Aussteuerung des dem elektrischen Propellermotors 4 zugeordneten Um- bzw. Stromrichters 7 abhängt. Des weiteren ist der positive und der negative Offset 26 abhängig von der Anzahl k der in das Bordnetz 6 einspeisenden Synchrongeneratoren 9 der Dieselgeneratoranlage 5, insbesondere etwa proportional dazu, da die Kurzschlussleistung Sk" im Bordnetz 6 ebenfalls etwa proportional der Anzahl k der ins Bordnetz 6 einspeisenden Synchrongeneratoren 9 der Dieselgeneratoranlage 5 ist.

Darüber hinaus können die Hoch- und die Rücklaufzeit T des adaptiven Drehmoment-Hochlaufgebers 26 für den vom Drehzahlregler 17 an den Stromregler 15 des Um- bzw. Stromrichters 7 des elektrischen Propellermotors 4 weiterzuleitenden Stromsollwert J* unter Berücksichtigung des jeweiligen Betriebszustands der Dieselgeneratoren 8,9 der das Bordnetz 6 mit elektrischer Energie speisenden Dieselgeneratoranlage 5 verändert werden.

Eine weitere, negative Grenze 39 für den Strom- bzw. Drehmomentsollwert J* ergibt sich aus einer von der Drehzahl n abhängigen Kennlinie 40. Diese sieht vor, dass das bremsende Drehmoment bei positiven Drehzahlen n, also Vorwärtsfahrt, stark begrenzt ist, bspw. auf 40% des maximal zur Verfügung stehenden Bremsmomentes, einerseits um den Schiffsrumpf vor dieser ungewohnten Belastung zu schützen und starke Vibrationen des Schiffes zu vermeiden. Diese Grenze weicht erst bei negativen Drehzahlen n, also Rückwärtsfahrt, weiter zurück, allerdings bspw. nur auf 60% des maximal zur Verfügung stehenden Bremsmomentes, einerseits um den Schiffskörper nicht zu beschädigen und andererseits um die Lager für die Antriebswelle 3 des Schiffspropellers 2, der bei Rückwärtsfahrt nach hinten gezogen wird, zu schonen.

Der erfindungsgemäße Schnellhalt dient nicht wie eine normale Senkung des Drehzahlsollwerte n* einer Verlangsamung der Fahrgeschwindigkeit des Schiffes, sondern dem schnellstmöglichen Stillsetzen der Schiffsschraube 2. Damit kann in Notsituationen eine Gefährdung von Menschenleben und/oder die Beschädigung von Material reduziert werden. Bspw. sollte der Schnellhalt bei der Meldung "Mann über Bord" ausgelöst werden, um zu vermeiden, dass eine im Wasser treibende Person von einer Schiffsschraube 2 erfasst und verletzt werden könnte.

Zu diesem Zweck befindet sich an Bord des Schiffes wenigstens ein vorzugsweise roter Alarmknopf mit der Aufschrift "Schnellhalt", bei dessen Betätigung eine automatisierte Bremssequenz abläuft, mit dem Ziel, die Schiffsschraube 2 in einem kürzestmöglichen Zeitraum, bspw. etwa 30-60 Sekunden, stillzusetzen. Ein solcher Alarmknopf sollte zumindest einmal auf der Brücke des Schiffes vorhanden sein. Bei großen Schiffen können weitere solche Knöpfe vorhanden sein, bspw. auf dem Achterdeck, etc. Diese Alarmknöpfe können parallel geschalten sein und das Anziehen eines selbsthaltenden Relais bewirken, oder sie sind in Serie geschalten und bewirken das Abfallen eines nicht selbsthaltenden Relais. Dessen Ausgang umfasst mehrere Umschalter 41-44, die aufgrund einer mechanischen Koppelung 45 stets gleichzeitig betätigt werden. Alle Umschalter 41-44 haben daher je eine Stellung "Normalbetrieb" und eine Stellung "Schnellhalt". Falls insgesamt nur ein Alarmknopf an Bord vorhanden ist, kann dieser selbst als Mehrfach-Umschalter mit vier Schaltzungen 41-44 ausgebildet sein.

Jeder der vier Umschalter 41-44 erfüllt beim Schnellhalt des Schiffspropellers 2 eine bestimmte Aufgabe: Umschalter 41 liegt zwischen dem Maschinentelegraphen 18 und dem Sollwerteingang des Hochlaufgebers 23 und sorgt dafür, dass dieser als Eingangssignal einen exakten Nullwert 0 erhält. Daher muss der Maschinentelegraph 18 überhaupt nicht betätigt werden.

Umschalter 42 liegt zwischen dem Funktionsgeber 24 für die drehzahlabhängige Generierung der Rücklaufzeit $T_D$ des Hochlaufgebers 23 und dessen Eingang für das Signal $T_D$. Damit wird von dem Funktionsgeber 24 für Normalbetrieb auf einen Funktionsgeber 46 für die Rücklaufzeit $T_D$ des Drehzahl-Hochlaufgebers 23 bei Schnellhalt umgeschalten. Der damit ermittelte Wert für die Rücklaufzeit $T_D$ bei Schnellhalt ist zwar auch abhängig von der Drehzahl n, jedoch deutlich kleiner als der Wert für die Rücklaufzeit $T_D$ bei Normalbetrieb; er liegt in der Größenordnung von etwa 10 Sekunden. Außerdem sinkt die von dem Funktionsgeber 46 generierte Rücklaufzeit $T_D$ im oberen Drehzahlbereich mit steigender Drehzahl n ab im Gegensatz zu der Rücklaufzeit $T_D$ des Funktionsgebers 24 für Normalbetrieb, die im oberen Drehzahlbereich mit steigender Drehzahl n zunimmt.

Entlang dieser Rampe kann der Drehzahlsollwert n* von der jeweiligen Ausgangsdrehzahl bis auf etwa 70% der Ausgangsdrehzahl innerhalb von etwa 3 Sekunden heruntergefahren werden. Bei normaler, angetriebener Fahrt vor Auslösen des Schnellhaltes entspricht der Wert von 70 % etwa einer Absenkung des Drehmomentes etwa auf Null, d.h., der Propeller schraubt sich mit einer der Fahrgeschwindigkeit des Schiffes entsprechenden Drehgeschwindigkeit durch das Wasser. Dieser Zustand entspricht etwa einer Art "Leerlauf", wobei der Propeller 2 weder antreibend noch bremsend auf das Schiff einwirkt. Damit ist zunächst der Antrieb vom Schiff genommen.

Gleichzeitig wird beim Auslösen des Schnellhaltes ein dritter Umschalter 43 betätigt. Dieser liegt zwischen dem Ausgang des Funktionsgebers 27 und dem Eingang für die Rücklaufzeit T des Drehmoment-Hochlaufgebers 26. Damit wird auf einen Funktionsgeber 47 umgeschalten, welcher den Anstieg der Bremsleistung während des Schnellhalts begrenzt, etwa nach der Formel ?P = n * ?D*. Dabei orientiert sich dieser Wert an der Fähigkeit der Dieselgeneratoren 8,9, von voller Leistung bis etwa zur Leistung Null herunterzufahren, ohne dabei außer Kontrolle zu geraten. Die Rücklaufzeit T des Drehmoment-Hochlaufgebers 26 für Schnellhalt liegt in der Größenordnung von 1 bis 10 Sekunden, vorzugsweise bei etwa 3 Sekunden.

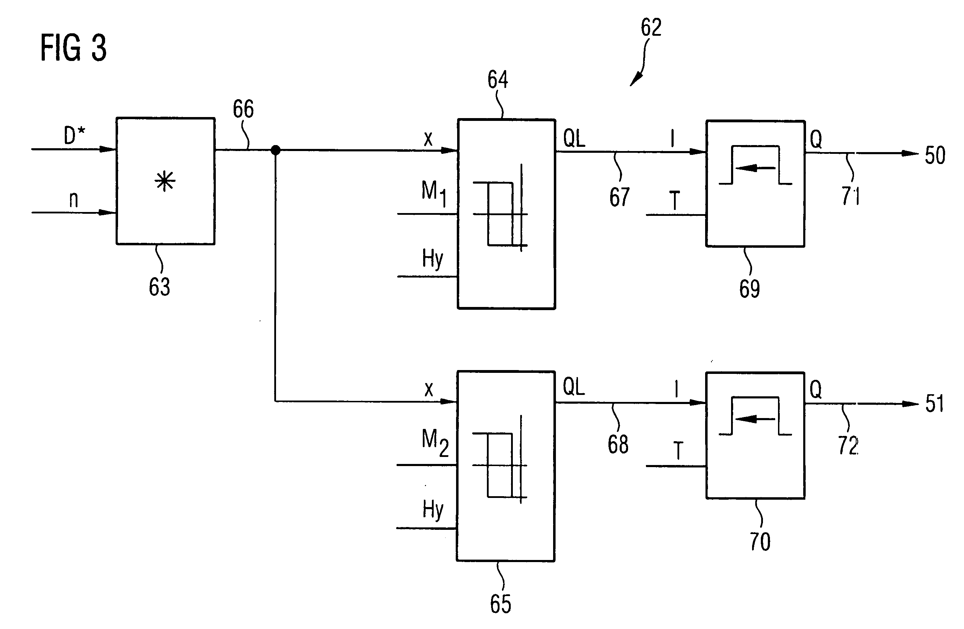

Nachdem die Antriebsleistung P bis etwa Null herunter gefahren wurde, beginnt der aktive Bremsvorgang, wobei der Propellerantriebsmotor 4 nun nicht mehr Leistung an die Propellerwelle 3 abgibt, sondern von dieser Leistung aufnimmt und über den Umrichter 7 in das Bordnetz 6 zurückspeist. Diese zurückgespeiste Leistung kann zu einem geringeren Teil vom Bordnetz aufgenommen werden; ein meistens größerer Teil wird in Bremswiderständen 48,49 in Wärme umgesetzt. Dazu können die Bremswiderstände 48,49 mittels Schaltern 50,51 je nach Bedarf an das Bordnetz 6 angeschalten werden. Die dazu verwendete Steuerung ist in FIG 3 wiedergegeben und wird weiter unten beschrieben.

Die Bremswiderstände 48,49 können zusammen mit dem Bordnetz 6 nur eine vorgegebene Leistung vernichten bzw. verbrauchen. Die Bremsleistung sollte diesen Wert möglichst nicht erreichen, weil ansonsten die von den Dieselgeneratoren 8,9 erzeugte Wirkleistung P zu Null würde, wodurch dieselben leicht außer Kontrolle geraten könnten.

Aus diesem Grund ist am elektrischen Ausgang 52 jedes Synchrongenerators 9 ein Leistungsmesser 53 angeschlossen, um die von diesem Generator 9 in das Bordnetz 6 eingespeiste Leistung P ständig zu messen. Dessen Ausgangssignal wird von einem Wandler 54 in ein normiertes (Wirk-) Leistungssignal 55 umgewandelt. Diese (Wirk-) Leistungssignale 55 aller aktiven Generatoren 9 -also aller derjeniger Generatoren 9, deren Leistungsschalter 34 zum Bordnetz 6 geschlossen sind - werden einem Baustein 56 zugeführt, der aus diesen Signalen 55 das mit dem niedrigsten bzw. minimalen Signalwert $P_{min}$ bildet.

Dieser Signalwert wird mit einem Referenzwert P verglichen, der bspw. auf 3 % der Nennleistung eines Generators 9 eingestellt ist. Hierbei wird der Wert P - $P_{min}$ gebildet. Ist $P_{min}$ kleiner als P, so ist der Differenzwert positiv, ein nachgeschalteter PI-Regler 57 oder Integrator integriert an seinem Ausgang 58 hoch bis zu einem oberen Begrenzungswert 59, der auf 0 (Null) eingestellt ist. Das Signal 58 gelangt als negatives Begrenzungssignal an die untere Stromwertbegrenzungseinheit 33; damit wird der Sollwert J* für das Bremsmoment D* allmählich gegen den Nullwert gefahren und damit die Bremsleistung so weit reduziert, bis die minimale Bremsleistung $P_{min}$ aller aktiven Generatoren 9 wieder oberhalb des Leistungsgrenzwerts P liegt. Denn dann ist das Differenzsignal P - $P_{min}$ wieder negativ, und der PI-Regler 57 integriert allmählich herab bis zu seinem negativen Grenzwert 60, der auf -1 eingestellt ist; damit ist der Stromsollwert J* wieder freigegeben und der Bremsmomentsollwert D* kann wieder absinken, wobei sich ggf. die rückgespeiste Bremsleistung wieder erhöht.

Schließlich wird bei Auslösen der Schnellhalt-Sequenz ein weiterer Umschalter 44 betätigt, der sich in der Leitung 39 zwischen dem Ausgang des Kennliniengebers 40 für die drehzahlabhängige Begrenzung des Bremsmomentes D* im Normalbetrieb einerseits und der unteren Stromwertbegrenzungseinheit 33 andererseits befindet. Damit wird dieser Grenzwert 39 von dem Kennliniengeber 40 umgeschalten auf einen Kennliniengeber 61 für die drehzahlabhängige Begrenzung des Bremsmomentes D* bei Schnellhalt. Der Kennliniengeber 61 für Schnellhalt unterscheidet sich von dem Kennliniengeber 40 für Normalbetrieb dadurch, dass der Grenzwert für das zulässige Bremsmoment D* im unteren Drehzahlbereich abgesenkt wird, bspw. auf 80% des Drehmoments bei angetriebener Vorwärtsfahrt. Damit erhält ein rascher Schnellhalt Priorität gegenüber dem Verschleiß der Lagerungen für die Antriebswelle 3.

FIG 3 zeigt die Schaltung 62 zur Einschaltung der Bremswiderstände 48, 49. Sie erhält von dem Regelungsblock 10 als Eingangssignale die Istdrehzahl n und den Drehmomentsollwert D* (= J*). Ein Multiplizierer 63 bildet das Produkt dieser beiden Signale n, D*. Dieses Produkt ist ein Maß für die aktuelle Wirkleistung P des Antriebs 1.

Ist das Produkt n * D* positiv, so bedeutet dies, dass der Propellermotor 4 an der Antriebswelle 3 Energie verrichtet; das Schiff wird angetrieben, entweder bei Fahrtrichtung vorwärts nach vorne, oder in Fahrtrichtung rückwärts nach hinten. Dazu leisten die Generatoren 9 die erforderliche Leistung. Die Bremswiderstände werden nicht gebraucht und sind abgeschalten. Man erkennt dies daran, dass in den nachgeschalteten Baugruppen 64, 65 bei jeweils positiven Eingangswerten das Ausgangssignal logisch 0 (Null) oder negativ ist.

Ist das Produkt n * D* dagegen negativ, so wird das Schiff von dem betreffenden Antriebsmotor 4 abgebremst. Dabei wird der Schiffspropeller 2, die Antriebswelle 3 und der Antriebsmotor mechanisch angetrieben, einerseits von den eigenen Schwungmassen, andererseits von dem Schiffspropeller 2, der durch das vorbeiströmende Wasser in Rotation versetzt bzw. gehalten wird. Diese Energie wird in das Bordnetz 6 eingespeist und muss ggf. von den Bremswiderständen 48,49 vernichtet, d.h., in Wärme umgesetzt werden. Dazu werden diese über die Schalter 50,51 selektiv an das Bordnetz 6 angeschlossen.

Die Entscheidung, wann ein Bremswiderstand 48,49 an das Bordnetz 6 geschaltet wird, treffen die Bausteine 54,65. Unterschreitet das Ausgangssignal 66 des Multiplizierers 63 einen vorgegebenen Grenzwert $M_1$, $M_2$ für die negative, also bremsende Leistung, so wechselt der betreffende Schaltungsblock 64,65 am Ausgang seinen logischen Zustand hin zu einer logischen 1. Vorzugsweise sind die Grenzwerte $M_1$, $M_2$ für unterschiedliche Bremswiderstände 48,49 auf unterschiedliche Niveaus eingestellt, bspw. auf $M_1$ = -0,1*$P_N$ einerseits und auf $M_2$ = -0,15*$P_N$ andererseits, wobei $P_N$ die Nennleistung des Antriebs bedeutet. Ferner sind die Grenzwertmeldebausteine 64 jeweils mit einer Hysterese Hy versehen, bspw. Hy = 0,03*$P_N$. Dies bedeutet, dass das jeweilige Ausgangssignal 67,68 erst wieder zu dem logischen Wert 0 zurückkehrt, wenn das zur Bremsleistung proportionale Signal 66 mindestens um den Wert Hy über den eingestellten Grenzwert $M_1$, $M_2$ angestiegen ist.

Ein jedem Grenzwertmeldebaustein 64,65 nachgeschaltetes Zeitglied 69,70 sorgt dafür, dass das betreffende Ansteuersignal 71,72 nicht länger andauert als ein vorgegebenes Zeitintervall T, welchen die Bremswiderstände 48,49 ohne Schaden überstehen, bspw. 30 Sekunden. Zu diesem Zweck sind die Zeitglieder 69,70 derart ausgebildet, dass ihr Ausgangssignal 71,72 im Anschluss an jede ansteigenden Flanke des betreffenden Eingangssignals I spätestens nach Ablauf des vorgegebenen Zeitintervalls T stets wieder abfällt.

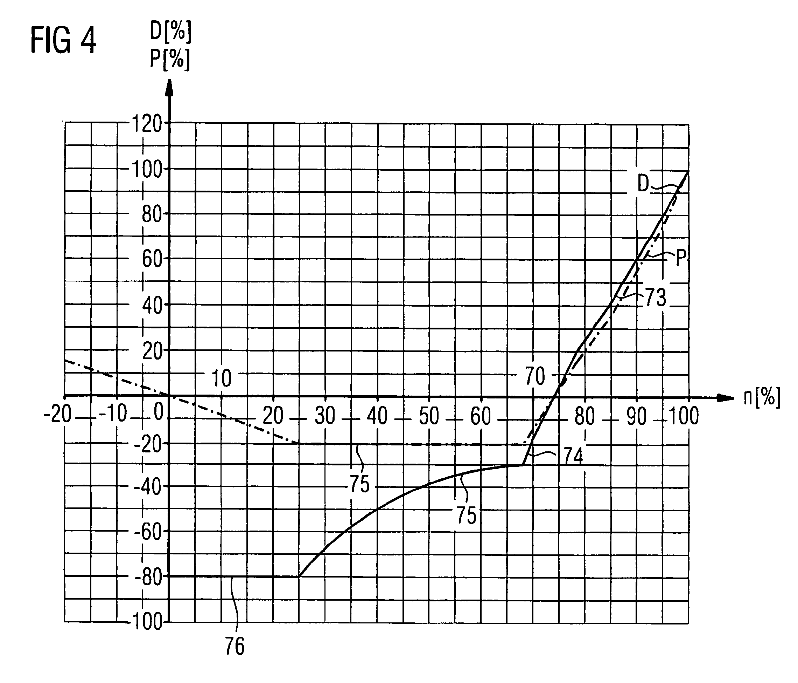

Bei Ausführung des erfindungsgemäßen Schnellhalts aus dem Nennbetrieb ergibt sich der in FIG 4 wiedergegebene Verlauf für das Drehmoment D (durchgezogene Linie) und für die Leistung P (strichpunktierte Linie) gegenüber der Drehzahl n.

Ab der Betätigung des Schnellhalt-Auslöseknopfs läuft der Drehzahlsollwert n* entlang einer von dem Drehzahl-Hochlaufgeber 23 gemäß der vom Funktionsgeber 46 empfangenen Rücklaufzeit $T_D$ erzeugten Rampe kontinuierlich gegen den neuen Wert 0. Die dabei verwendete Rücklaufzeit $T_D$ liegt in der Größenordnung von etwa 10 Sekunden.

Bei zunächst angetriebener Fahrt ergibt die Überlagerung der Drehung des Schiffspropellers 2 mit der Schiffsbewegung eine Schraubenlinie für jeden Propellerflügel, deren Steigung kleiner ist als die Neigung der Propellerflügel gegenüber der Propellerebene - der Schiffspropeller 2 verdrängt Wasser entgegen der Fahrtrichtung des Schiffes und treibt dieses dabei an. Wird das Motordrehmoment reduziert, bremst diese Relativbewegung zwischen Propellerflügeln und Wasser den Propeller 2 zunächst schnell ab. Daher kann der Propeller 2 einer Senkung der Solldrehzahl n* zunächst gut folgen, auch wenn der Antriebsmotor 4 - bedingt durch die untere Strombegrenzungseinheit 33 - einen Zeitraum von etwa 3 Sekunden benötigt, um von voll angetriebenem Zustand in eine Art Leerlauf bzw. zu der Fahrt des Schiffes etwa "synchrone" Drehzahl überzugehen, wo das erzeugte Drehmoment D etwa null ist. Nach Ablauf dieser 3 Sekunden ist die Propellerdrehzahl von zunächst 100 % abgesunken auf einen Wert zwischen 70% und 80% der ursprünglichen Drehzahl, insbesondere zwischen 73% und 75%.

An diese erste Phase 73 mit noch positivem Drehmoment D schließt sich nun eine zweite Phase 74 an, in der das Drehmoment D negativ wird - der Propellermotor 4 beginnt aktiv zu bremsen. Da allerdings der Bremsvorgang nicht mehr vom Wasser unterstützt wird, sinkt nun die Drehzahl n langsamer als zu Beginn, während der Anstieg des Bremsmomentes D zu negativen Werten hin etwa konstant bleibt; dieser Anstieg wird durch den Hochlaufgeber 26 beeinflusst. Infolgedessen wird die durchgezogene Kurve für das Drehmoment D gegenüber der Drehzahl n zunächst steiler.

Gleichzeitig steigt die Bremsleistung $P_{Br}$ an, weil die Drehzahl n nicht in dem Maße sinkt, wie das Bremsmoment D steigt; das Produkt P = D * n wird also größer. Solange die zurückgespeiste Bremsleistung P noch relativ niedrig ist, bspw. weniger als 0,1*$P_N$, ist das Bordnetz 6 in der Lage, diese Leistung aufzunehmen. Sobald die Bremsleistung $P_{Br}$ etwa 10 % der Nennantriebsleistung $P_N$ erreicht hat, wird der erste Bremswiderstand 48 an das Bordnetz 6 geschaltet, bei 15 % der Nennantriebsleistung $P_N$ der zweite 49. Die Bremswiderstände 48,49 arbeiten an der relativ konstanten Spannung $U_N$ des Bordnetzes 6, so dass ihre Leistungsaufnahme durch $P_{Bw} = U_N * I = U_N^2 / R$ vorgegeben ist, wobei R der Gesamtwiderstand eines Bremswiderstandes 48,49 ist.

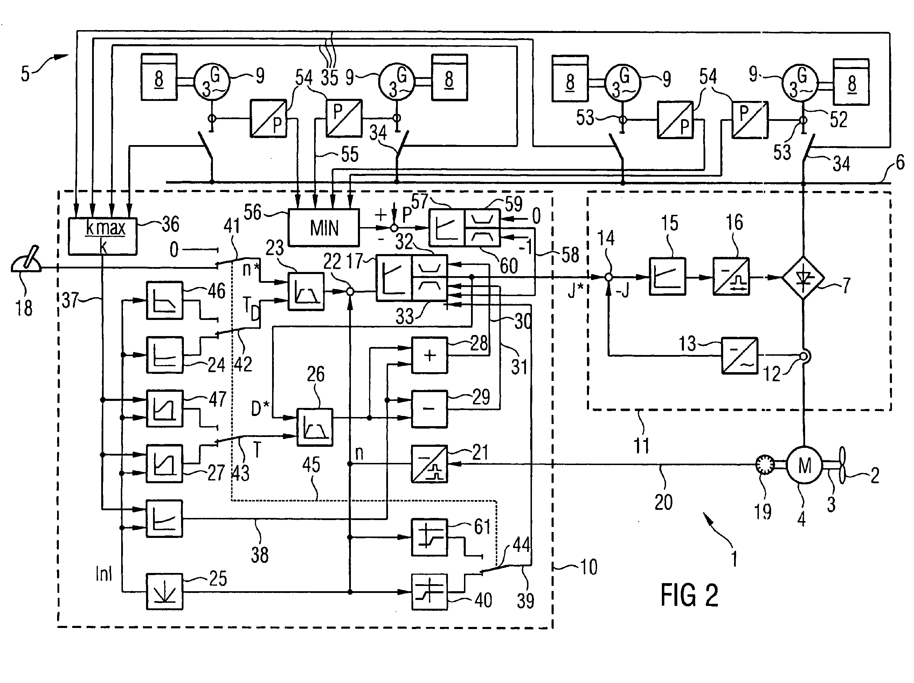

Wenn die zurückgespeiste Bremsleistung $P_{Br}$ weiter zunimmt und größer wird als vom Bordnetz 6 absorbiert und in den Bremswiderständen 48,49 vernichtet werden kann, würde die Leistung der Dieselgeneratoren 8,9 auf null zurückgefahren. Dabei könnten die Dieselgeneratoren 8,9 außer Kontrolle geraten; deshalb wird die Leistung der Generatoren 9 gemessen 53,54 und der Sollwert für das Bremsmoment D* durch den PI-Regler 57 derart begrenzt, dass von allen aktiven Generatoren 9 noch eine Minimalleistung $P_{min}$ in das Bordnetz 6 eingespeist werden kann. Diese Phase 75 ist dadurch gekennzeichnet, dass die Bremsleistung $P_{Br}$ etwa konstant bleibt, und zwar auf einem Wert, der geringfügig niedriger ist (etwa um k*$P_{min}$, vgl. FIG 2) als die vom Bordnetz 6 absorbierte Leistung $P_{Bn}$ zuzüglich der in allen aktivierten Bremswiderständen 48,49 in Wärme umgesetzte Leistung $P_{Bw}$:

$$P_{Br} = P_{Bn} + SP_{Bw} + k*P_{min} = const.$$

Wegen

$$P_{Br} = D * n = const.$$

folgt in dieser Phase 75 das Drehmoment D, aufgetragen gegenüber der Drehzahl n, etwa einer Hyperbelkurve, wobei das Drehmoment D allmählich zu immer negativeren Werten ansteigt.

Dies ist zunächst möglich, weil der Funktionsgeber 40, der einen engen Grenzwert für das Bremsmoment D von bspw. nur 40% des Nennmomentes $D_N$ bei angetriebener Vorwärtsfahrt vorsieht, beim Schnellhalt durch Umlegen des Schalters 44 ersetzt wird durch den Funktionsgeber 61, der einen im unteren Drehzahlbereich zu negativeren Werten hin ansteigenden Wert des Bremsmoments D vorsieht, typischerweise bis zu etwa 80% von $D_N$ für Drehzahlen unterhalb von etwa 30% der Nenndrehzahl $n_N$.

Sobald der Stromsollwert J* bzw. Drehmomentsollwert D* diese - beim Schnellhalt herabgesetzte - Begrenzung 39 erreicht, bleibt nun das Bremsmoment D etwa konstant, und die Bremsleistung sinkt mit abnehmender Drehzahl n linear ab (Phase 76), bis der Propeller 2 zum Stillstand gekommen ist. Dieser Zustand ist nach etwa 30 bis 60 Sekunden erreicht.

**Patentansprüche**

1. Verfahren zur schnellstmöglichen Stillsetzung der elektrisch angetriebenen Propeller (2) eines Schiffs (Schnellhalt), **dadurch gekennzeichnet, dass** die Bremsenergie von wenigstens einem Elektromotor (4) des Schiffsantriebs (1) als elektrische Energie in ein Bordnetz (6) zurückgespeist wird, wobei bei Schnellhalt die zurückgespeiste Bremsenergie zumindest teilweise in wenigstens einem, vorübergehend an das Bordnetz (6) angeschalteten Bremswiderstand (48,49) in Wärme umgewandelt wird.

2. Verfahren nach Anspruch 1, **dadurch gekennzeichnet, dass** bei Schnellhalt die Bremsenergie von einem den Elektromotor (4) im Fahrbetrieb speisenden Um- und/oder Stromrichter (7) in das Bordnetz (6) zurückgespeist wird.

3. Verfahren nach einem der Ansprüche 1 bis 2, **dadurch gekennzeichnet, dass** bei Schnellhalt die zurückgespeiste Bremsleistung berechnet oder ermittelt wird, insbesondere durch Multiplikation (63) des Drehzahlistwertes n mit dem von einem Drehzahlregler (10) erzeugten Drehmomentsollwert D*.

4. Verfahren nach Anspruch 1 oder 3, **dadurch gekennzeichnet, dass** bei Schnellhalt wenigstens ein Bremswiderstand (48,49) an das Bordnetz (6) geschaltet wird, wenn der berechnete oder ermittelte Wert der zurückgespeisten Bremsleistung betragsmäßig größer wird als ein vorgegebener Schwellwert $M_1$, $M_2$.

5. Verfahren nach einem der Ansprüche 1 bis 4, **dadurch gekennzeichnet, dass** bei Schnellhalt wenigstens ein an das Bordnetz (6) geschalteter Bremswiderstand (48,49) erst dann wieder vom Bordnetz (6) getrennt wird, wenn eine der folgenden Bedingungen erfüllt ist:

   a) der Betrag der zurückgespeisten Bremsleistung sinkt unter einen zweiten, kleineren Schwellwert (Hysterese $M_1$-Hy, $M_2$-Hy), oder
   b) seit Einschalten des Bremswiderstands (48,49) ist ein vorgegebenes Zeitintervall verstrichen (maximale Einschaltzeit T).

6. Verfahren nach einem der vorhergehenden Ansprüche, **dadurch gekennzeichnet, dass** bei Schnellhalt die Struktur der Drehzahlregelung (10) des elektrischen Propellerantriebssystems (1) gegenüber der Struktur bei Normalbetrieb nicht verändert wird.

7. Verfahren nach einem der vorhergehenden Ansprüche, **dadurch gekennzeichnet, dass** bei Schnellhalt ein oder mehrere Parameter der Drehzahlregelung (10) des elektrischen Propellerantriebssystems (1) gegenüber den entsprechenden Parametern bei Normalbetrieb verändert werden.

8. Verfahren nach einem der vorhergehenden Ansprüche, **dadurch gekennzeichnet, dass** bei Schnellhalt der Drehzahlsollwert n* von dem Maschinentelegraphen (18) umgeschaltet wird auf den fest eingestellten Sollwert "0".

9. Verfahren nach einem der vorhergehenden Ansprüche, **dadurch gekennzeichnet, dass** bei Schnellhalt die Rücklaufzeit $T_D$ für einen Drehzahlsollwert-Hochlaufgeber (23) reduziert wird, insbesondere durch Umschalten (42) des Eingangs für die Rücklaufzeit $T_D$ auf einen anderen Funktionsgeber (46).

**10.** Verfahren nach einem der vorhergehenden Ansprüche, **dadurch gekennzeichnet, dass** bei Schnellhalt die Rücklaufzeit T für einen Drehmomentsollwert-Hochlaufgeber (26) reduziert wird, insbesondere durch Umschalten (43) des Eingangs für die Rücklaufzeit T auf einen anderen Funktionsgeber (47).

**11.** Verfahren nach einem der vorhergehenden Ansprüche, **dadurch gekennzeichnet, dass** bei Schnellhalt eine das Bremsmoment begrenzende Kennlinie zu größeren, zulässigen Betragswerten des Bremsmomentes D hin verschoben wird, insbesondere durch Umschalten (44) eines Grenzwerteingangs einer unteren Stromwertbegrenzungseinheit (33) auf einen anderen Funktionsgeber (61).

**12.** Verfahren nach einem der vorhergehenden Ansprüche, **dadurch gekennzeichnet, dass** die in das Bordnetz (6) eingespeiste Leistung jedes aktiven Generators (9) gemessen wird (53).

**13.** Verfahren nach Anspruch 12, **dadurch gekennzeichnet, dass** bei Schnellhalt die minimale, von einem Generator (9) in das Bordnetz (6) eingespeiste Leistung mit einem Schwellwert (P) verglichen wird, und bei Unterschreitung desselben die Bremsleistung reduziert wird, insbesondere durch eine Absenkung bzw. Begrenzung (58) des Drehmomentsollwertes D*.

**14.** Vorrichtung zur schnellstmöglichen Stillsetzung wenigstens eines elektrisch angetriebenen Propellers (2) eines Schiffs (Schnellhalt), **gekennzeichnet durch** ein Bordnetz (6), das in die Lage versetzt ist, von wenigstens einem Elektromotor (4) des Schiffsantriebs (1) zurückgespeiste Bremsenergie aufzunehmen, und wenigstens einen Bremswiderstand (48,49), der zur teilweisen Umwandlung der bei einem Schnellhalt in das Bordnetz (6) eingespeisten Bremsenergie in Wärme über einen Schalter (50,51), Relais od. dgl. an das Bordnetz (6) anschließbar ist.

**15.** Vorrichtung nach Anspruch 15, **gekennzeichnet durch** einen den Elektromotor (4) im Fahrbetrieb speisenden Um- und/oder Stromrichter (7), der in der Lage ist, bei Schnellhalt die von wenigstens einem Elektromotor (4) des Schiffsantriebs (1) zurückgespeiste Bremsenergie in das Bordnetz (6) einzuspeisen.

**16.** Vorrichtung nach einem der Ansprüche 14 bis 15, **gekennzeichnet durch** wenigstens einen Baustein (63) zur Berechnung oder Ermittlung der bei Schnellhalt zurückgespeisten Bremsleistung, insbesondere in Form eines Multiplikators für den Drehzahlistwert n einerseits und den von einer Drehzahlregelung (10) erzeugten Drehmomentsollwert D* andererseits.

**17.** Vorrichtung nach einem der Anspruch 16, **gekennzeichnet durch** einen Komparator, Grenzwertschalter (64,65) od. dgl. zum Vergleich des berechneten oder ermittelten Wertes der zurückgespeisten Bremsleistung mit einem vorgegebenen Schwellwert $M_1$, $M_2$, dessen Ausgang (67,68) mit wenigstens einem Schalter (50,51) zum Anschließen wenigstens eines Bremswiderstandes (48,49) an das Bordnetz (6) gekoppelt ist.

**18.** Vorrichtung nach einem der Ansprüche 14, 16 oder 17, **gekennzeichnet durch** wenigstens einen Hysteresebaustein (64,65), um den einen Bremswiderstand (48,49) mit dem Bordnetz (6) verbindenden Schalter (50,51) wieder zu öffnen, wenn ein zweiter, betragsmäßig geringerer Schwellwert (Hysterese $M_1$-Hy, $M_2$-Hy) über- bzw. betragsmäßig unterschritten wird.

**19.** Vorrichtung nach einem der Ansprüche 14 oder 16 bis 18, **gekennzeichnet durch** wenigstens einen Zeitgeberbaustein (69,70), um den einen Bremswiderstand (48,49) mit dem Bordnetz (6) verbindenden Schalter (50,51) wieder zu öffnen, wenn seit dem Einschalten des Bremswiderstands (48,49) ein vorgegebenes Zeitintervall T verstrichen ist.

**20.** Vorrichtung nach einem der Ansprüche 14 bis 19, **gekennzeichnet durch** einen oder mehrere Umschalter (41-44), Umschaltrelais od. dgl., um bei Schnellhalt ein oder mehrere Parameter der Drehzahlregelung (10) des elektrischen Propellerantriebssystems (1) gegenüber den entsprechenden Parametern bei Normalbetrieb zu verändern.

**21.** Vorrichtung nach Anspruch 20,
**gekennzeichnet durch** einen Umschalter (41), Umschaltrelaiskontakt od. dgl., der/das bei Schnellhalt den Drehzahlsollwert n* von dem Maschinentelegraphen (18) auf den fest eingestellten Sollwert "0" umschaltet.

**22.** Vorrichtung nach einem der Ansprüche 20 oder 21,
**gekennzeichnet durch** einen Umschalter (42), Umschaltrelaiskontakt od. dgl., der/das bei Schnellhalt die Rücklaufzeit $T_D$ für einen Drehzahlsollwert-Hochlaufgeber (23) auf einen reduzierten Wert umschaltet, der vorzugsweise von einem gesonderten Funktionsgeber (46) generiert ist.

**23.** Vorrichtung nach einem der Ansprüche 20 bis 22,
**gekennzeichnet durch** einen Umschalter (43), Umschaltrelaiskontakt od. dgl., der/das bei Schnellhalt die Rücklaufzeit (T) für einen Drehmomentsollwert-Hochlaufgeber (26) auf einen reduzierten Wert umschaltet, der vorzugsweise von einem gesonderten Funktionsgeber (47) generiert ist.

**24.** Vorrichtung nach einem der Ansprüche 20 bis 23,
**gekennzeichnet durch** einen Umschalter (44), Umschaltrelaiskontakt od. dgl., der/das bei Schnellhalt von einem das Bremsmoment bei Normalbetrieb begrenzenden Kennliniengeber (40) auf einen das Bremsmoment bei Schnellhalt begrenzenden Kennliniengeber (61) mit größeren, zulässigen Betragswerten des Bremsmomentes umschaltet.

**25.** Vorrichtung nach einem der Ansprüche 14 bis 24,
**gekennzeichnet durch** einen oder mehrere Sensoren (53), Wandler od. dgl., um die in das Bordnetz (6) eingespeiste Leistung jedes aktiven Generators (9) zu messen.

**26.** Vorrichtung nach Anspruch 25,
**gekennzeichnet durch** einen Komparator, Integrator (57) od. dgl., um bei Schnellhalt die minimale, von einem Generator (9) in das Bordnetz (6) eingespeiste Leistung $P_{min}$ mit einem vorgegebenen Schwellwert P zu vergleichen.

**27.** Vorrichtung nach Anspruch 26,
**dadurch gekennzeichnet, dass** das Ausgangssignal (58) des Komparators, Integrators (57) od. dgl. zu einer den Sollwert für das Bremsmoment D* begrenzenden Baugruppe (33) geführt ist, um den Bremsmomentsollwert D* zu reduzieren, wenn die minimale, von einem Generator (9) in das Bordnetz (6) eingespeiste Leistung $P_{min}$ geringer wird als ein vorgegebener Schwellwert P.

## Claims

**1.** Method for the fastest possible stopping of the electrically driven propeller (2) of a ship (crash stop), **characterised in that** the braking energy of at least one electric motor (4) of the marine propulsion system (1) is fed back into the marine electrical system (6) as electrical energy, wherein, in the event of a crash stop, the fed-back braking energy is at least partially converted into heat in at least one braking resistor (48, 49) temporarily connected to the marine electrical system (6).

**2.** Method according to claim 1,
**characterised in that** in the event of a crash stop the braking energy of an inverter and/or power converter (7) supplying the electric motor (4) during drive mode is fed back into the marine electrical system (6).

**3.** Method according to one of claims 1 to 2,
**characterised in that** in the event of a crash stop the fed-back braking power is calculated or determined, in particular by multiplication (63) of the actual speed (rpm) value n by the torque setpoint value D* produced by a speed (rpm) controller (10).

**4.** Method according to claim 1 or 3,
**characterised in that** in the event of a crash stop at least one braking resistor (48, 49) is connected to the marine electrical system (6) if the calculated or determined absolute value of the fed-back braking power is greater than a predefined threshold value $M_1$, $M_2$.

**5.** Method according to one of claims 1 to 4,
**characterised in that** in the event of a crash stop at least one braking resistor (48,49) connected to the marine electrical system (6) is not disconnected again from the marine electrical system (6) until one of the following conditions is fulfilled:

a) the absolute value of the fed-back braking power falls below a second, lower threshold value (hysteresis $M_1$-Hy, $M_2$-Hy), or

b) a predefined time interval has elapsed (maximum connect time T) since connection of the braking resistor (48, 49).

6. Method according to one of the preceding claims, **characterised in that** in the event of a crash stop the structure of the speed control system (10) of the electrical propeller drive system (1) is not changed compared to the structure during normal operation.

7. Method according to one of the preceding claims, **characterised in that** in the event of a crash stop one or more parameters of the speed control system (10) of the electrical propeller drive system (1) are changed compared to the corresponding parameters during normal operation.

8. Method according to one of the preceding claims, **characterised in that** in the event of a crash stop the speed setpoint value n* is switched by the engine room telegraph (18) to the fixed setpoint value "0".

9. Method according to one of the preceding claims, **characterised in that** in the event of a crash stop the ramp-down time TD for a speed setpoint ramp generator (23) is reduced, in particular by switching (42) the input for the ramp-down time TD to another function generator (46).

10. Method according to one of the preceding claims, **characterised in that** in the event of a crash stop the ramp-down time T for a torque setpoint ramp generator (26) is reduced, in particular by switching (43) the input for the ramp-down time T to another function generator (47).

11. Method according to one of the preceding claims, **characterised in that** in the event of a crash stop a braking torque limiting characteristic is shifted in the direction of larger, permissible absolute values of the braking torque D, in particular by switching (44) of a limit value input of a lower current value limiting unit (33) to another function generator (61).

12. Method according to one of the preceding claims, **characterised in that** the power injected into the marine electrical system (6) by each active generator (9) is measured (53).

13. Method according to claim 12,
**characterised in that** in the event of a crash stop the minimum power injected into the marine electrical system (6) by a generator (9) is compared with a threshold value (P), and if this value is undershot, the braking power is reduced, in particular by decreasing or rather limiting (58) the torque setpoint value D*.

14. Device for the fastest possible stopping of at least one electrically driven propeller (2) of a ship (crash stop), **characterised by** a marine electrical system (6) which is designed to accept braking energy fed back by at least one electric motor (4) of the marine propulsion system (1), and at least one braking resistor (48, 49) which can be connected to the marine electrical system (6) via a switch (50, 51), relay or similar for partial conversion into heat of the braking energy injected into the marine electrical system (6) in the event of a crash stop.

15. Device according to claim 15,
**characterised by** an inverter and/or power converter (7) which supplies the electric motor (4) during drive mode and is able, in the event of a crash stop, to inject into the marine electrical system (6) the braking energy fed back by at least one electric motor (4) of the marine propulsion system (1).

16. Device according to one of claims 14 to 15,
**characterised by** at least one device (63) for calculating or determining the braking power fed back in the event of a crash stop, particularly in the form of a multiplier for the actual speed value n on the one hand and the torque setpoint value D* generated by a speed control system (10) on the other.

17. Device according to claim 16,
**characterised by** a comparator, limit switch (64, 65) or similar for comparing the calculated or determined value

13

of the fed-back braking power with a predefined threshold value $M_1$, $M_2$, the output (67, 68) of which is coupled to at least one switch (50, 51) for connecting at least one braking resistor (48, 49) to the marine electrical system (6).

18. The device according to one of claims 14, 16 or 17, **characterised by** at least one hysteresis device (64, 65) for re-opening the switch (50, 51) connecting a braking resistor (48, 49) to the marine electrical system (6) if a second, lower absolute threshold value (hysteresis $M_1$-Hy, $M_2$-Hy) is exceeded or undershot in absolute value terms.

19. The device according to one of claims 14 or 16 to 18, **characterised by** at least one timer device (69, 70) for re-opening the switch (50, 51) connecting a braking resistor (48, 49) to the marine electrical system (6) if a predefined time interval T has elapsed since the connection of the braking resistor (48, 49).

20. The device according to one of claims 14 to 19,
    **characterised by** one or more changeover switches (41-44), changeover relays or similar, in order, in the event of a crash stop, to change one or more parameters of the speed control system (10) of the electrical propeller drive system (1) compared to the corresponding parameters during normal operation

21. The device according to claim 20,
    **characterised by** a changeover switch (41), changeover relay contact or similar which, in the event of a crash stop, switches the speed setpoint value n* of the engine room telegraph (18) to the fixed setpoint value "0".

22. The device according to one of claims 20 or 21,
    **characterised by** a changeover switch (42), a changeover relay contact or similar which, in the event of a crash stop, switches the ramp-down time TD for a speed setpoint ramp generator (23) to a reduced value which is preferably generated by a separate function generator (46).

23. The device according to one of claims 20 to 22,
    **characterised by** a changeover switch (43), changeover relay contact or similar which, in the event of a crash stop, switches the ramp-down time (T) for a torque setpoint ramp generator (26) to a reduced value which is preferably generated by a separate function generator (47).

24. The device according to one of claims 20 to 23,
    **characterised by** a changeover switch (44), changeover relay contact or similar which, in the event of a crash stop, switches from a characteristic generator (40) limiting the braking torque during normal operation to a characteristic generator (61) limiting the braking torque in the event of a crash stop and having higher permissible absolute braking torque values.

25. The device according to one of claims 14 to 24,
    **characterised by** one or more sensors (53), transducers or similar for measuring the power injected into the marine electrical system (6) by each active generator (9).

26. The device according to claim 25,
    **characterised by** a comparator, integrator (57) or similar for comparing the minimum power $P_{min}$ injected into the marine electrical system (6) by a generator (9) with a predefined threshold value P.

27. The device according to claim 26,
    **characterised in that** the output signal (58) of the comparator, integrator (57) or similar is fed to a module (33) limiting the setpoint value for the braking torque D* in order to reduce the braking torque setpoint value D* if the minimum power $P_{min}$ injected into the marine electrical system (6) by a generator (9) is less than a predefined threshold value P.

**Revendications**

1. Procédé d'arrêt aussi rapide que possible des hélices ( 2 ) entraînées électriquement d'un bateau ( arrêt rapide ),
   **caractérisé en ce que** l'on retourne l'énergie de freinage d'au moins un moteur ( 4 ) électrique de la propulsion ( 1 ) du bateau comme énergie électrique à un réseau ( 6 ) de bord, dans lequel, lors de l'arrêt rapide, l'énergie de freinage retournée est transformée en chaleur, au moins en partie, dans au moins une résistance ( 48, 49 ) de freinage branchée provisoirement sur le réseau ( 6 ) de bord.

**2.** Procédé suivant la revendication 1,
**caractérisé en ce que**, lors de l'arrêt rapide, on retourne au réseau ( 6 ) de bord l'énergie de freinage d'un convertisseur et/ou d'un mutateur ( 7 ) alimentant en marche le moteur ( 4 ) électrique.

**3.** Procédé suivant l'une des revendications 1 à 2, **caractérisé en ce que**, lors d'un arrêt rapide, on calcule ou on détermine la puissance de freinage retournée, notamment en multipliant ( 63 ) la valeur n réelle de la vitesse de rotation par la valeur D* de consigne du couple de rotation produite par un régleur ( 10 ) de vitesse de rotation.

**4.** Procédé suivant la revendication 1 ou 3,
**caractérisé en ce que**, lors d'un arrêt rapide, on branche au moins une résistance ( 48, 49 ) de freinage sur le réseau ( 6 ) de bord, si la valeur calculée ou déterminée de la puissance de freinage retournée est plus grande en valeur absolue qu'une valeur $M_1$, $M_2$ de seuil prescrite.

**5.** Procédé suivant l'une des revendications 1 à 4, **caractérisé en ce que**, lors d'un arrêt rapide, on sépare une résistance ( 48, 49 ) de freinage branchée sur le réseau ( 6 ) de bord à nouveau du réseau ( 6 ) de bord, seulement lorsque l'une des conditions suivantes est satisfaite :

a) la valeur absolue de la puissance de freinage retournée s'abaisse en-dessous d'une deuxième valeur de seuil plus petite ( hystérésis $M_1$-Hy, $M_2$-Hy ), ou
b) depuis le branchement de la résistance ( 48, 49 ) de freinage, un intervalle de temps prescrit s'est écoulé ( temps de T de branchement maximum ).

**6.** Procédé suivant l'une des revendications précédentes, **caractérisé en ce que**, lors d'un arrêt rapide, on ne modifie pas la structure de la régulation ( 10 ) de la vitesse de rotation du système ( 1 ) électrique d'entraînement des hélices par rapport à la structure en fonctionnement normal.

**7.** Procédé suivant l'une des revendications précédentes, **caractérisé en ce que**, lors d'un arrêt rapide, on modifie un paramètre ou plusieurs paramètres de la régulation ( 10 ) de la vitesse de rotation du système ( 1 ) électrique d'entraînement des hélices par rapport aux paramètres correspondants en fonctionnement normal.

**8.** Procédé suivant l'une des revendications précédentes, **caractérisé en ce que**, lors d'un arrêt rapide, on fait passer par le transmetteur ( 18 ) d'ordres la valeur n* de consigne de vitesse de rotation à la valeur « 0 » de consigne réglée de manière fixe.

**9.** Procédé suivant l'une des revendications précédentes, **caractérisé en ce que**, lors d'un arrêt rapide, on réduit le temps $T_D$ de retour d'un transmetteur ( 23 ) à pleine vitesse de la valeur de consigne de la vitesse de rotation, notamment en mettant ( 42 ) l'entrée du temps $T_D$ de retour sur un autre transmetteur ( 46 ) de fonction.

**10.** Procédé suivant l'une des revendications précédentes, **caractérisé en ce que**, lors d'un arrêt rapide, on réduit le temps T de retour d'un transmetteur ( 26 ) de pleine vitesse de valeur de consigne du couple de rotation, notamment en mettant ( 43 ) l'entrée du temps T de retour sur un autre transmetteur ( 47 ) de fonction.

**11.** Procédé suivant l'une des revendications précédentes, **caractérisé en ce que**, lors d'un arrêt rapide, on décale une courbe caractéristique limitant le couple de freinage vers des valeurs absolues admissibles plus grandes du couple D de freinage, notamment en mettant ( 44 ) une entrée de valeur limite d'une unité ( 33 ) de limitation de la valeur du courant sur un autre transmetteur ( 61 ) de fonction.

**12.** Procédé suivant l'une des revendications précédentes, **caractérisé en ce que** l'on mesure ( 53 ) la puissance de chaque génératrice ( 9 ) active injectée dans le réseau ( 6 ) de bord.

**13.** Procédé suivant la revendication 12,
**caractérisé en ce que**, lors d'un arrêt rapide, on compare la puissance minimum injectée par une génératrice ( 9 ) dans le réseau ( 6 ) de bord à une valeur ( P ) de seuil, et si l'on est en-dessous de celle-ci, on réduit la puissance de freinage, notamment en abaissant ou en limitant ( 58 ) la valeur D* de consigne du couple de rotation.

**14.** Dispositif d'arrêt rapide d'au moins une hélice ( 2 ) entraînée électriquement d'un bateau ( arrêt rapide ),
**caractérisé par** un réseau ( 6 ) de bord, qui est en mesure d'absorber de l'énergie de freinage retournée par au moins un moteur ( 4 ) électrique de la propulsion ( 1 ) du bateau et par au moins une résistance ( 48, 49 ) de freinage, qui, pour transformer au moins en partie en chaleur l'énergie de freinage injectée dans le réseau ( 6 ) de bord lors d'un arrêt rapide, peut être raccordée au réseau ( 6 ) de bord par un commutateur ( 50, 51 ), un relais ou analogue.

**15.** Dispositif suivant la revendication 14,
**caractérisé par** un convertisseur et/ou un mutateur ( 7 ) alimentant en marche le moteur ( 4 ) électrique et en mesure, lors d'un arrêt rapide d'injecter dans le réseau ( 6 ) de bord de l'énergie de freinage retournée par au moins un moteur ( 4 ) électrique de la propulsion ( 1 ) du bateau.

**16.** Dispositif suivant l'une des revendications 14 à 15,
**caractérisé par** au moins un module ( 63 ) de calcul ou de détermination de la puissance de freinage retournée lors d'un arrêt rapide, notamment sous la forme d'un multiplicateur de la valeur n réelle de la vitesse de rotation d'une part et de la valeur D* de consigne du couple de rotation produite par une régulation ( 10 ) de vitesse de rotation d'autre part.

**17.** Dispositif suivant la revendication 16,
**caractérisé par** un comparateur, un interrupteur ( 64, 65 ) à valeur limite ou analogue pour la comparaison de la valeur calculée ou déterminée de la puissance de freinage retournée à une valeur $M_1$, $M_2$ de seuil prescrite, dont la sortie ( 67, 68 ) est couplée au réseau ( 6 ) de bord par au moins un commutateur ( 50, 51 ) pour le raccordement d'au moins une résistance ( 48, 49 ) de freinage.

**18.** Dispositif suivant l'une des revendications 14, 16 ou 17,
**caractérisé par** au moins un module ( 64, 65 ) d'hystérésis, pour réouvrir l'interrupteur ( 50, 51 ), reliant une résistance ( 48, 49 ) de freinage au réseau ( 6 ) de bord, lorsqu'une deuxième valeur ( hystérésis $M_1$-Hy, $M_2$-Hy ) de valeur de seuil plus petite en valeur absolue devient supérieure ou devient inférieure en valeur absolue.

**19.** Dispositif suivant l'une des revendications 14 ou 16 à 18,
**caractérisé par** au moins un module ( 69, 70 ) indicateur de temps, pour réouvrir l'interrupteur ( 50, 51 ) reliant une résistance ( 48, 49 ) de freinage au réseau ( 6 ) de bord, lorsque, depuis le branchement de la résistance ( 48, 49 ) de freinage, un intervalle T de temps prescrit s'est écoulé.

**20.** Dispositif suivant l'une des revendications 14 à 19,
**caractérisé par** un commutateur ou par plusieurs commutateurs ( 41 à 44 ), relais de commutation ou analogue, pour, lors d'un arrêt rapide, modifier un paramètre ou plusieurs paramètres de la régulation ( 10 ) de vitesse de rotation du système ( 1 ) électrique d'entraînement d'hélices par rapport aux paramètres correspondants en fonctionnement normal.

**21.** Dispositif suivant la revendication 20,
**caractérisé par** un commutateur ( 41 ), un contact de relais de commutation ou analogue, qui, lors d'un arrêt rapide, fait passer la valeur n* de consigne de la vitesse de rotation par le transmetteur ( 18 ) d'ordres à la valeur « 0 » de consigne réglée de manière fixe.

**22.** Dispositif suivant l'une des revendications 20 ou 21,
**caractérisé par** un commutateur ( 42 ), un contact de relais de commutation ou analogue, qui, lors d'un arrêt rapide, fait passer le temps $T_D$ de retour d'un transmetteur ( 23 ) à pleine vitesse de valeur de la vitesse de rotation à une valeur réduite, qui est produite de préférence par un transmetteur ( 46 ) de fonction distinct.

**23.** Dispositif suivant l'une des revendications 20 à 22,
**caractérisé par** un commutateur ( 43 ), un contact de relais de commutation ou analogue, qui, lors d'un arrêt rapide, fait passer le temps T de retour d'un transmetteur ( 26 ) de pleine vitesse à valeur de consigne du couple de rotation à une valeur réduite, qui est produite de préférence par un transmetteur ( 47 ) de fonctions distinct.

**24.** Dispositif suivant l'une des revendications 20 à 23,
**caractérisé par** un commutateur ( 24 ), un contact de relais de commutation ou analogue, qui, lors d'un arrêt rapide, fait passer d'un transmetteur ( 40 ) de courbe caractéristique limitant en fonctionnement normal le couple de freinage à un transmetteur ( 61 ) de courbe caractéristique limitant le couple de freinage lors d'un arrêt rapide et ayant des valeurs absolues admissibles plus grandes du couple de rotation.

**25.** Dispositif suivant l'une des revendications 14 à 24,

**caractérisé par** un capteur ou par plusieurs capteurs ( 53 ), transducteurs ou analogue, pour mesurer la puissance de chaque génératrice ( 9 ) active injectée dans le réseau ( 6 ) de bord.

26. Dispositif suivant la revendication 25,
**caractérisé par** un comparateur, un intégrateur ( 57 ) ou analogue, pour, lors d'un arrêt rapide, comparer la puissance $P_{min}$ minimum injectée par une génératrice ( 9 ) dans le réseau ( 6 ) de bord à une valeur P de seuil prescrite.

27. Dispositif suivant la revendication 26,
**caractérisé en ce que** le signal ( 58 ) de sortie du comparateur, de l'intégrateur ( 57 ) ou analogue est envoyé à un module ( 33 ) limitant la valeur de consigne du couple D* de freinage, pour réduire la valeur D* de consigne du couple de freinage, lorsque la puissance $P_{min}$ minimum injectée par une génératrice ( 9 ) dans le réseau ( 6 ) de bord est plus petite qu'une valeur P de seuil prescrite.

FIG 1

EP 2 062 813 B1

FIG 2

# FIG 3

EP 2 062 813 B1

FIG 4

EP 2 062 813 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1568601 A